# EUROPEAN PATENT SPECIFICATION

(11) **EP 0 387 781 B1**
(45) Date of publication and mention of the grant of the patent: **08.06.1994**
(21) Application number: 90104717.5
(22) Date of filing: 13.03.1990
(51) Int. Cl.: G01R 33/06

(54) **Ferrous object sensor assembly**
Eiserne Objekte detektierende Anordnung
Dispositif pour détecter des objets en fer

(30) Priority: 13.03.1989 US 322518
(43) Date of publication of application: 19.09.1990
(73) Proprietor: DURAKOOL INCORPORATED, Elkhart, Indiana 46514 (US)
(72) Inventor: Wolf, Ronald J., Goshen, Indiana 46526 (US); Hedeen, Larry, Howe, Indiana 46746 (US)
(74) Representative: Bauer, Robert, Dipl.-Ing.

(56) References cited:
- GB-A- 817 553

## Description

The present invention relates to a ferrous object sensor assembly according to the preamble of claim 1.

Some known magnetic flux responsive sensors, such as Hall effect sensors, are used as proximity sensors. Such sensors are employed to detect the presence or absence of a magnet. They rely on the magnetic flux density existing in the sensing plane of the sensor.

Other known Hall effect sensors are used in a wide variety of applications to detect the presence of a tooth or a notch on a ferrous vane wheel. Such sensors are incorporated into assemblies and used e.g. in the automobile industry for breakerless ignition timing sensing circuitry. In this case a magnet is mounted a fixed distance from the sensing plane of the Hall effect sensor thus defining an air gap. The ferrous vane wheel having one or more teeth or notches is rotatably mounted with respect to the air gap so that the teeth or notches pass through the air gap when the wheel is rotated. When a tooth is disposed in the gap, the magnetic field is shunted away from the sensor changing the magnetic flux density in the sensing plane thereof.

The Hall effect sensors used in any such applications operate as a function of the magnetix flux density. In other words, the Hall effect sensor is responsive to a predetermined level of magnetic flux density at a predetermined polarity. When such a level is present, the Hall effect sensor will provide an output voltage signal representing either the presence or absence of a magnet or ferrous body, as the case may be. Accordingly, such Hall effect sensors are typically used for proximity sensing.

In another known application of a conventional Hall effect sensor used to detect teeth or notches on a ferrous vane wheel the Hall effect sensor is disposed adjacent one pole face of a magnet, its sensing plane being at the opposite side. As the individual teeth or notches pass near the sensing plane of the sensor, the magnetic flux therein varies. However, in this case, the small output signal values available from the Hall effect sensor same as from a magneto-resistive element (MRE) often make it desirable to amplify the output signal to provide an output signal of higher signal to noise ratio and thus mitigate the need for specialised filtering circuits or a special transmission cable. Therefore, such known Hall effect sensor as found e.g. in a Sprague module Model No. UGN-3503U, are coupled to an amplifier which boosts the output voltage signal to a much higher level. However, since this coupling is regularly effected through a capacitor having a resistive capacitive time constant, the output of such a Hall effect sensor assembly provides an output voltage signal representative of the change only in magnetic flux density with respect to time. Thus, such Hall effect sensor assemblies cannot be used to detect a tooth or notch on a ferrous wheel at either zero speed or very high speeds. In such an application, for proper operation, the speed of the ferrous wheel would depend on the capacitor time constant. Accordingly, such sensor assemblies cannot be used as proximity sensors.

Further, all three of the aforementioned sensor applications rely on pole face magnetism. In other words, the magnetic flux emanating from a pole face is used to provide the required magnetic flux density to actuate the sensor. However, it is known that at the pole face temperature induced change of the magnetic flux density is significant. Thus, such devices can provide erratic output signals when used in an environment subject to a wide range of temperatures, such as an automobile transmission or engine.

A typical example of such a ferrous object sensor assembly is disclosed in GB-A-817 553. In this specific case a magnetic element whose permeability is to be determined and which may be a permanent magnet is placed between spaced-apart coils of an electromagnet. A flux sensor is disposed adjacent the magnetic element to measure the magnetic flux from the electromagnet. Since the magnetic flux generated by the electromagnet is fixed, the amount of flux sensed by the flux sensor will be related to the permeability of the magnetic element where the magnetic element is a permanent magnet, the flux sensor such as a Hall effect element is disposed on a side of the permanent magnet such that its sensing plain is generally perpendicular to the magnetic axis of the permanent magnet and thus perpendicular to the magentic flux. With such a configuration, where the magnetic element is a permanent magnet, the flux sensor will primarily measure the magnetic flux emmanating from the pole faces of the permanent magnet. However, as mentioned before, magnetic flux emanating from the pole faces of a permanent magnet is relatively temperature dependent. Thus the use of any such device can result in spurious outputs when the sensor is subjected to relatively wide temperature-excursions and thus would not be suitable for use in certain applications where relatively accurate outputs are required over a relatively wide temperature range such as in anti-lock breaking systems. In addition the sensor assembly of the aforementioned reference could not function as a proximity sensor.

The invention as claimed is to remedy these shortcomings by providing a ferrous object sensor assembly which allows to avoid amplification of the sensor output and which is relatively temperature stable as compared with known ferrous object sensor assemblies relying on pole face magnetism.

In the ferrous object sensor assembly of the invention the sensing plane is exposed to radial magnetic flux components substantially perpendicular to the lateral surface to which the magnetic flux sensor is attached. Since the magnetic flux sensor in this case is not disposed at a pole face and since it does not rely substantially upon pole face magnetic flux, the magnetic flux density change due to temperature is insignificant. Thus, the output signal of the assembly is relatively stable over a wide temperature range. Further, the yield of the sensor is enhanced with respect to a sensor disposed adjacent a pole face as mentioned above so that amplification in many cases can be avoided.

The ferrous object sensor assembly of the present invention can detect the presence, absence or approach of a ferrous object at any finite speed including zero speed.

In the following the invention and some embodiments or applications thereof are described more in detail, taking reference to the accompanying drawings. In these
- Fig. 1: is a perspective representation of a conventional Hall effect sensor which relies on a moving permanent magnet for operation;
- Fig. 2: is a perspective representation of another conventional application of a Hall effect sensor assembly wherein the magnet is spaced apart from the Hall effect sensor, defining a gap through which teeth of a ferrous vane wheel must pass;
- Fig. 3: is a perspective representation of yet another conventional application of a Hall effect sensor assembly for sensing the presence of teeth or notches on a ferrous wheel;
- Fig. 4: illustates a magnetic field pattern across the air gap between a magnet and a Hall effect sensor assembly as shown in Fig. 2;
- Fig. 5: illustrates the magnetic field pattern of Fig. 4 when a ferrous tooth is disposed between the magnet and the Hall effect sensor;
- Fig. 6: is a perspective view of an embodiment of a ferrous object sensor assembly in accordance with the present invention, this embodiment employing a Hall effect sensor;
- Fig. 7: is a perspective view of another embodiment very similar to that one of Fig. 6;
- Fig. 8: illustrates the magnetic field pattern of a permanent magnet having two opposed pole faces;
- Fig. 9: illustrates the magnetic field pattern of the same permanent magnet in the presence of a ferrous object disposed adjacent one of its pole faces;
- Fig. 10: schematically illustrates a ferrous object sensor assembly in accordance with the present invention used as a proximity sensor of a ferrous object;
- Fig. 11: illustrates a ferrous object sensor assemply in accordance with the present invention used for sensing a tooth on a ferrous wheel;
- Fig. 12: illustrates a ferrous object sensor assembly in accordance with the present invention used to sense a notch on a ferrous wheel;
- Fig. 13: illustrates some of the various shapes of magnets which may be used to form a part of the ferrous object sensor assembly in accordance with the present invention;
- Fig. 14: is a curve representative of the radial component of the magnetic flux density at the lateral surface of a magnet having a uniform cross-section versus displacement along this lateral surface parallel to the magnetic axis;
- Fig. 15: is a perspective view of an alternative embodiment of the present invention employing a reed switch as the magnetic flux sensor;
- Fig. 16: is a schematic principal illustration of a magneto-resistive element (MRE);
- Fig. 17: is a schematic view of a magneto-resistor sensor (MRS) which incorporates an MRE as shown in Fig. 16;
- Fig. 18: is a perspective view of an alternative embodiment of the present invention including such MRS;
- Fig. 19: is a perspective view of another alternative embodiment of the present invention which includes an axial contact switch; and
- Fig. 20: is a perspective view of still another alternative embodiment of the present invention which includes a magnetic leaf switch.

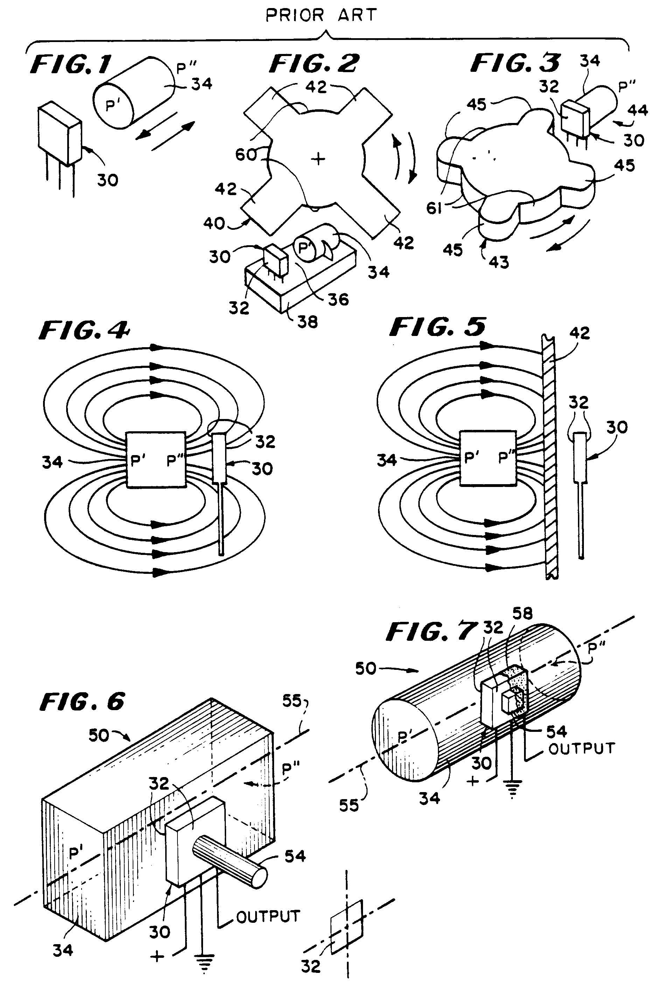

As mentioned before, the Figures 1 to 3 show different conventional ferrous object sensor assemblies using Hall effect sensors. The Hall effect sensor 30 illustrated in Fig. 1 relies on a permanent magnet 34 moving with respect to the Hall effect sensor. Such an approach is relatively unconvenient and may present various technical difficulties. For example, in order to use such sensors to detect rotation, a series of permanent magnets would have to be mounted on the periphery of a rotating member. This would be relatively expensive and inconvenient.

In the assembly shown in Fig. 2 the Hall effect sensor 30 and a magnet 34 are mounted on a carrier 38. The magnet 34 is disposed a fixed distance from the sensing plane 32 of the Hall effect sensor, thus defining an air gap 36. A ferrous vane wheel 40 having one or more teeth 42 is rotatably mounted with respect to the air gap 36 so that the teeth 42 pass through the air gap when the wheel 40 is rotated. When a tooth 42 is disposed in the air gap 36, the magnetic field is shunted away from the sensor 30 changing the magnetic flux density in the sensing plane 32. This ferrous vane wheel principle is best understood with reference to Figures 4 and 5. Fig. 4 represents the magnetic flux pattern of the assembly illustrated in Fig. 2 across the air gap 36. In the absence of a tooth 42 the magnetic field is applied directly to the sensing plane 32 of the sensor 30. Fig. 5 represents a condition where a tooth 42 is disposed between a pole face P'' and the sensing plane 32 of the sensor 30. In this situation, since the reluctance of the tooth 42 is much less than the reluctance of air, the tooth 42 shunts the magnetic field away from the sensor 30.

The Hall effect sensors used in she applications shown in Figures 1 and 2 operate as a function of the magnetic flux density. In other words, the Hall effect sensor is responsive to a predetermined level of magnetic flux density at a predetermined polarity. When such a level is present, the Hall effect sensor will provide an output voltage signal representing either the presence or absence of a permanent magnet body or of a ferrous body and such Hall effect sensors are therefore typically used for proximity sensing.

In the known application of a Hall effect sensor as shown in Fig. 3 one pole face of a permanent magnet 34 is disposed adjacent the Hall effect sensor 30 forming an assembly 44. The assembly 44 is rigidly mounted with respect to a ferrous wheel 43. As the individual teeth 45 of the wheel pass near the sensing plane 32 of the sensor 30 the magnetic flux varies. More specifically, as a tooth 45 passes adjacent the sensing plane 32, the magnetic flux density in the sensing plane 32 is increased. When a notch 61 (or area between contiguous teeth 45) is disposed adjacent the sensing plane 32, the magnetic flux density applied to the sensing plane 32 decreases. Such a Hall effect sensor 30 is thus also able to provide an output voltage signal representative of the presence of a tooth 45 or notch 61. However, the output signal obtained from a Hall effect sensor 30 as employed in Fig. 3 is relatively small and, as mentioned before, to improve the signal to noise ratio, it is desirable to amplify this output signal.

If, as usual, the sensor is capacitively coupled to the respective amplifier, the sensor assembly provides an output signal representative of the change only in magnetic flux density with respect to time, this preventing that the assembly can be used as a proximity sensor. Additionally, all three sensor applications illustrated in the Figures 1 to 3 rely on pole face magnetism, this being of a fringe type which is subject to undesirably changing as a function of temperature.

Generally speaking, various magnetic flux responsive sensors are known such as Hall effect sensors, discrete, hybrid or integrated circuits comprising Hall effect sensors, reed switches, magnetically variable resistor elements (MRE's), magnetically variable resistor sensors (MRS's, such as hybrid, discrete or integrated circuits including an MRE), magnetic axial contact switches, and the like. Such sensors all provide an electrical output signal corresponding to the magnetic flux density existing in their sensing plane.

A Hall effect sensor relies on the effect of a magnetic field on a semiconductor. More specifically, in a Hall effect sensor if a constant voltage is applied across a thin sheet of semiconductor material, it will cause a constant Hall bias current to flow. When such a semiconductor material is placed in a magnetic field with flux lines at approximately right angles to the plane of the Hall bias current, an output voltage, directly proportional to the magnetic field density, is produced across the output terminals. Some known Hall effect sensors are formed into integrated circuits (IC's) which may also contain a current regulator for providing a constant magnitude of current, a voltage regulator, signal conditioning circuitry and an output transistor to provide for a switching type operation.

As used herein, the term "Hall effect IC" refers to a device which incorporates a Hall effect sensor (as previously defined) and other circuitry and the like disposed in an integrated package, such as a Sprague Model No. UGN-3040. A "Hall effect assembly" refers to a Hall effect IC (or a Hall effect sensor alone or with hybrid and discrete circuitry forming the equivalent of a Hall effect IC) in combination with a permanent magnet and other components.

A "ferrous object sensor assembly" refers to the combination of a magnetic flux responsive sensor and a permanent magnet and may also include a flux concentrator and electronic circuitry. The term "ferrous object sensor assembly" is intended to cover various embodiments of such a combination, including discrete components, integrated circuits, thick film and thin film technology, or any combination thereof.

As used herein, "magnetic axis 55" refers to the longitudinal axis between opposing pole faces P' and P'' as illustrated e.g. in Fig. 6. The designations P' and P'' are used throughout to express that either pole face may represent a north pole or a south pole.

There are various types of Hall effect IC's available. For example, there are switching type Hall effect IC's which turn on or operate in the presence of a magnetic field and turn off or are released when the magnetic field is removed. Another type of Hall effect IC is a latching type device. In this device, the IC is turned on in the presence of a magnetic field of a given polarity and turned off in the presence of a magnetic field of the opposite polarity. There are also linear Hall effect IC's which provide an output voltage signal, linearly proportional to the applied magnetic field. As will be understood by those of ordinary skill in the art, the principles of the invention are applicable to all types of Hall effect sensors and Hall effect IC's same as to other magnetic flux responsive sensors including or not including additional components as mentioned before.

In all of the known applications of Hall effect sensors and IC's used for sensing ferrous objects as shown e.g. in Fig. 3, such devices rely upon pole face magnetism for proper operation. "Pole face magnetism" refers to directing the magnetic field from one of the pole faces of the permanent magnet through a sensing plane 32 or the Hall effect sensor 30. As is known by those of ordinary skill in the art, pole face magnetism is sensitive to temperature change. In applications where a Hall effect IC is used, e.g. in a transmission or timing circuit in an automobile, such sensor can provide variable responses as a result of wide temperature ranges encountered affecting the magnetic flux density in such applications. The Hall effect assembly in accordance with the present invention mitigates this problem by providing a ferrous object sensor assembly relatively unaffected by temperature. The Hall effect sensor of the assembly in accordance with the present invention does not rely upon pole face magnetism as in known applications, such as shown in Fig. 3, but rather, relies upon magnetism which emanates from a lateral surface of the permanent magnet, intermediate the opposing pole faces.

The principles of the invention are equally applicable to a Hall effect sensor in combination with electrical circuitry of multiple leads or a three lead Hall effect IC. For simplicity, in the following only a Hall effect IC is described and illustrated.

Referring now to the Figures 6 and 7, two embodiments of the invention are illustrated in the form of a ferrous object sensor assembly 50 employing a Hall effect IC. The ferrous object sensor assembly 50 includes a conventional Hall effect sensor 30 in the form of an IC, such as a Sprague Model No. UGN-3131 or UGN-3050 or a Siemens Model TLE 4903F, in addition to a permanent magnet 34. Such Hall effect IC's heretofore have only been used in applications as illustrated in Figures 1 and 2 and not known to have been used in an application as illustrated in Fig. 3. Other known Hall effect IC's, such as a Sprague Model UGN-3503U, have been conventionally used in an application as shown in Fig. 3. However, as mentioned before, due to the relatively small sensor output signal in this case, such IC's generally include an amplifier capacitively coupled to the Hall effect sensor so that the IC's are responsive to the change only in magnetic flux density with respect to time. Thus, in an application as in Fig. 3, such a conventional Hall effect IC will be unable to provide an output signal immediately upon power up and when the ferrous wheel is rotating very slowly or is stationary.

This problem can be solved by using a Hall effect IC, such as a Sprague Model No. UGN-3131, UGN-3050 or a Siemens Model No. TLE 4903F, which does not include a coupling capacitor. However, anyway, the sensor applied in accordance with the present invention may spare a need for amplification. By eliminating the coupling capacitor, the ferrous object sensor assembly 50 is able to detect the presence of a tooth 45 or notch 61 on a rotatably mounted ferrous wheel 43 at relatively slow or zero speed and thus also functions as a proximity sensor giving the proper output immediately at power up and without motion of the target object.

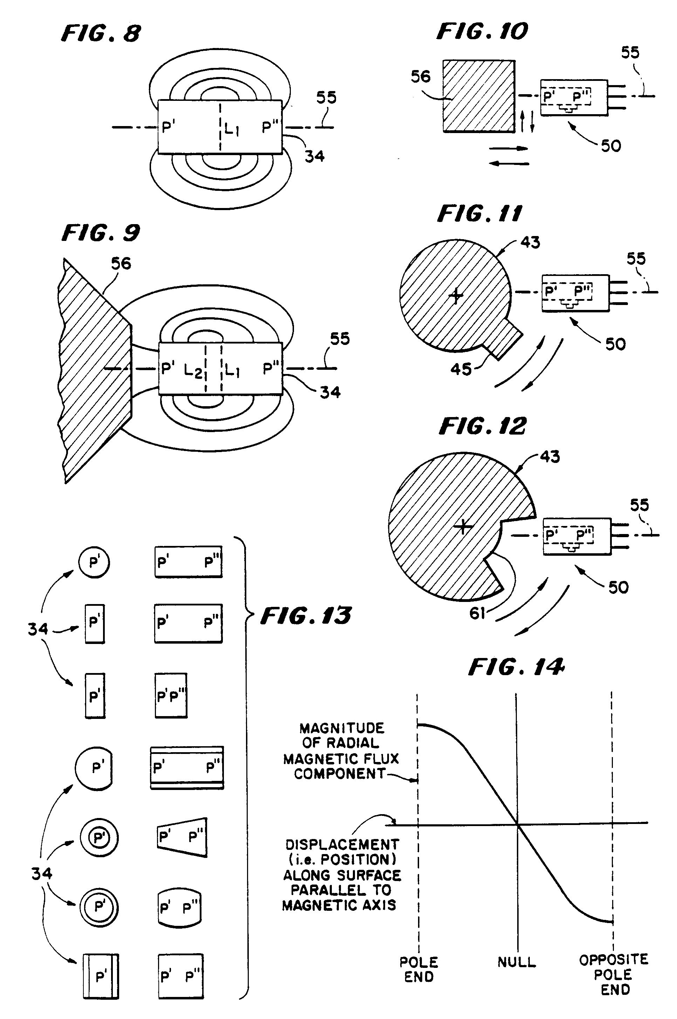

The principles of operation of the invention are best understood with reference to the Figures 8 and 9. Fig. 8 illustrates the magnetic flux pattern of a permanent magnet 34. The permanent magnet 34 includes opposing pole faces P' and P'' and a magnetic axis 55 substantially perpendicular to the opposing pole faces P' and P''. As shown in Fig. 8, radial or normal magnetic flux components (components substantially perpendicular to the magnetic axis 55) at the surface of the magnet are zero in a neutral plane illustrated at L₁. This neutral plane is located at approximately the midpoint of the magnet 34, when the magnet is uninfluenced by a ferrous object. The radial components of the magnetic flux increase in opposite polarity at the surface between the neutral plane at L₁ and either pole face as shown in Fig. 14.

When a ferrous object is brought into proximity with one of the pole faces P' or P'', the neutral plane is shifted toward the ferrous object to a position designated as L₂ in Fig. 9. When the ferrous object is moved away from the pole face, the neutral plane will return to its original location at L₁. Based on the above, it was determinated that the magnetic flux density at points along the lateral surface of the magnet, between the neutral plane at L₁ and the pole faces experiences a relatively significant change when a ferrous object is moved in the proximity of one of the pole faces. The principle of the present invention utilizes this phenomenon, found along the lateral surface of the magnet, to apply magnetic flux density changes to a magnetic flux responsive sensor.

As mentioned before, in known magnetic flux responsive sensors, temperature change can adversely affect the proper function because such sensor assemblies rely substantially on pole face magnetism directed through their Hall effect sensor. It has been found that at a lateral surface on the magnet, i.e. intermediate opposing pole faces, the magnetic flux density change due to temperature effects on the magnet is insignificant. Since the ferrous object sensor assembly in accordance with the present invention relies substantially on radial components of magnetic flux density emanating from the lateral surface of the permanent magnet it provides an output signal relatively unaffected by temperature change.

As also mentioned before, the ferrous object sensor assembly 50 as illustrated in Figures 6 and 7 comprises a Hall effect sensor 30, such as a Sprague Model UGN-3131, UGN-3050 or a Siemens Model No. TLE 4903F. The sensing plane 32 of the Hall effect sensor 30 is mounted on the lateral side of a permanent magnet 34 between opposing pole faces P' and P'', such that the sensing plane 32 is substantially perpendicular to radial magnetic flux components. Depending on the magnetic flux density level required by the Hall effect sensor 30, the Hall effect sensor may be located anywhere between the neutral plane and one of the pole faces where the magnetic flux density satisfies the requirement.

E.g. when the ferrous object sensor assembly 50 is used as a threshold device for providing a digital output signal, it is necessary to determine a suitable operable location for the sensing plane 32 of the Hall effect sensor 30 along the lateral surface of the magnet 34 intermediate opposing pole faces. To this end the Hall effect sensor can be connected to a light emitting diode (LED) via a pull up resistor. If the Hall effect sensor 30 is initially disposed adjacent an area of relatively high magnetic density of the proper polarity on the magnet 34, the LED will illuminate. The Hall effect sensor 30 is then moved toward the neutral plane at L₁ until the LED goes out, which defines the release point. When a ferrous object is brought into proximity with a pole face, the electrical output signal of the Hall effect sensor should change. If the change in magnetic flux density is insufficient to produce a useful output change, the magnet should be replaced with one having a greater power product and the sensor should then be repositioned and the above process repeated.

When the ferrous object sensor assembly 50 is used to provide a linear output signal, a linear sensor is used, such as a Hall effect sensor, a linear Hall effect IC, an MRE, a linear MRS, etc.. It is known that the output of such linear sensors, under an identical set of influences, will slightly vary in output signal value from individual to individual. An important advantage of the present invention is that the sensor position along the magnet's lateral surface permits the position of the sensor to be adjusted along the lateral surface parallel to the magnetic axis 55 until the final output signal value of the sensor assembly is calibrated to some desired value. This simple position adjustment mitigates error in the final output signal that would exist due to variation among individual sensors.

The Hall effect sensor 30 or other magnetic flux responsive sensor may be attached to the lateral surface of the magnet 34 with an epoxy or other known conventional adhesive. A flux concentrator or ferrous piece 54 may be used to enhance or reduce the magnetic flux density directed through the magnetic flux responsive sensor to optimize the sensing range or maximize the working air gap of the assembly. The ferrous piece 54 may be attached to the magnetic flux sensor by any known means, such as an adhesive.

Alternatively, the ferrous piece 54, the permanent magnet 34 and the magnetic flux sensor may be positioned relative to each other by any means including various carriers, such as the carrier 38 of Fig. 2, formed from plastics, ceramics, paper, fiber or metals, tapes or shrink tubing. An encapsulant may also be used to position the components. Further, the sensor assembly 50 may be protected by enclosing it in a plastic, metal, ceramic or a paper fiber housing 58, as illustrated in Fig. 7, with or without encapsulating or potting compounds. It may also be cast, overmolded, or insert molded with either thermoset or thermoplastic materials thus, aside from protection, to shield a pole face not used for detecting a ferrous object from being magnetically influenced.

The sensor assembly 50 in accordance with the present invention may be used in various applications as illustrated e.g. in Figures 10 to 12. In Fig. 10, the sensor assembly 50 is used as a proximity sensor to provide end on proximity sensing of a ferrous target object 56. As shown, the ferrous target object 56 may be moved in a direction either parallel to the magnetic axis 55 or in a direction perpendicular to the magnetic axis 55.

In Figures 11 and 12, the ferrous object sensor assembly 50 is used to detect the absence or presence of a tooth 45 or, respectively, notch 61 on a ferrous wheel 43. Unlike the ferrous object sensor assemblies normally used in this way which include an internal or discrete capacitor, the ferrous object sensor assembly 50 in accordance with the present invention is able to detect the presence or absence of a tooth or notch on the ferrous wheel 43 immediately upon power up and at zero speed.

Although Figures 11 and 12 illustrate sensing of a rotating ferrous object whose rotational axis is substantially normal to the magnetic axis 55, the principles of the invention are equally applicable when the rotational axis is substantially parallel to the magnetic axis.

As illustrated in Figures 6 and 7, a bar or cylindrical magnet 34 is used. However, the cross-section of the permanent magnet 34 is not critical to the practice of the invention. More particularly, magnets 34 having various cross-sectional shapes, such as a D-shaped, round, rectangular, irregular, magnetized with pole faces on opposite sides, as shown in Fig. 13, may be used. Also, the cross-section of the magnet 34 need not be uniform along the magnetic axis 55. It can also be tapered or barrel-shaped, for example.

In addition to the embodiments using Hall effect sensors and the like, the principles of the invention are also applicable to various other magnetic flux responsive sensors, such as reed switches, magnetically variable resistance elements (MRE's) magnetically variable resistor sensors (MRS's), magnetic axial contact switches and the like.

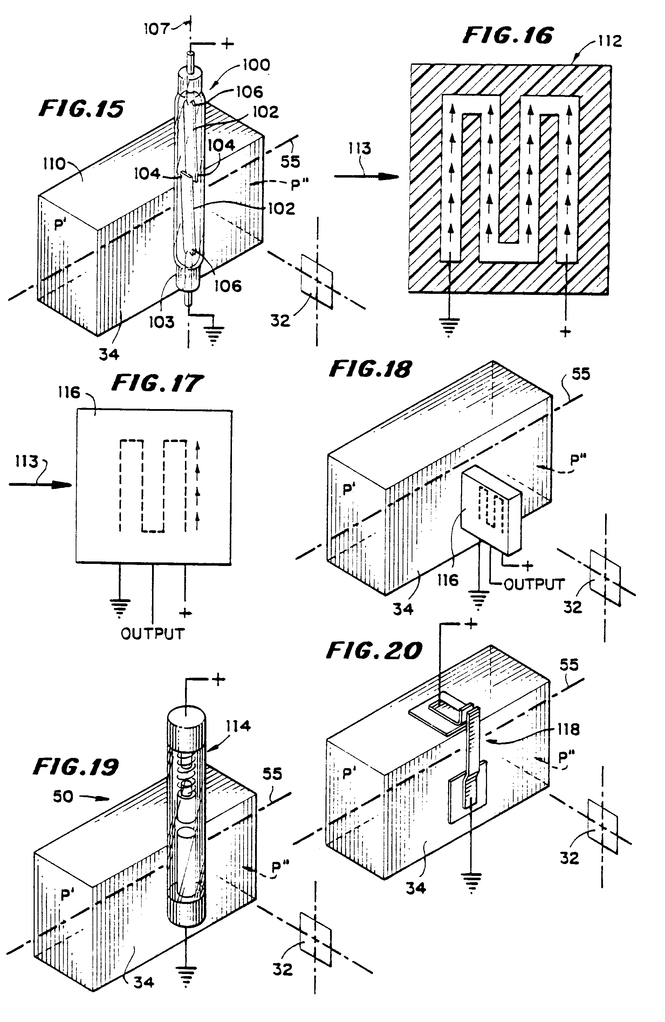

Fig. 15 illustrates an alternative embodiment utilizing a reed switch 100 for a magnetic flux responsive sensor. The reed switch 100 comprises a pair of reed members 102, formed from a magnetic material and disposed in a housing 103. The reed members 102 are disposed such that the ends 104 slightly overlap (as illustrated in Fig. 15) and are separated by a small air gap to define a contact arrangement. The other ends 106 form electrical terminals for allowing the reed switch 100 to be connected to an external electrical circuit (not shown).

In accordance with the present invention, the reed switch 100 is positioned adjacent the surface intermediate the pole faces P' and P'' of the magnet 34 such that its sensing plane 32 is substantially perpendicular to the magnetic axis 55, also the longitudinal axis 107 of the reed switch itself being substantially perpendicular to the magnetic axis 55. Moreover, the reed switch 100 is positioned such that one of the reed members 102 is disposed with most of its length below the plane of the top surface 110 of the magnet 34 as illustrated in Fig. 15 whereas the point at which the reed members 102 overlap is disposed above the plane of the top surface 110 of the magnet 34. Further, the reed switch 100 is positioned at an appropriate position along the surface of the magnet intermediate the opposing pole faces P' and P'' to cause the reed switch to either open or close in response to changes in magnetic flux density produced by a ferrous object being moved in and out of proximity with one of the pole faces.

Fig. 18 shows another alternative embodiment utilizing a magneto-resistive sensor (MRS) 116 as shown in Fig. 17 the sensor 116 including an MRE 112, as illustrated in Fig. 16, and electronic circuitry.

In the MRE 112 of Fig. 16 the small arrows illustrate a possible internal magnetization orientation of the MRE and an arrow 113 in the plane of the MRE shows the direction to apply an external magnetic flux field. The sensing plane 32 for the MRE 112 is parallel to the plane of the MRE. As illustrated in Fig. 18, the sensing plane 32 is oriented perpendicular to the magnetic axis 55. Again, operation is based upon radial components of the magnetic flux.

Fig. 19 illustrates another alternative embodiment which employs an axial contact switch 114 as the magnetic flux sensor 30. Fig. 20 illustrates still another alternative embodiment using a magnetic leaf switch 118 as the sensor 30. In both of these embodiments same as with those of Figures 15 and 18, it is important that the sensors 30 be disposed such that their sensing planes 32 are parallel with radial components of the magnetic flux density emanating from the magnet surface intermediate opposing pole faces, that is to say that these sensing planes are perpendicular to the magnetic axis 55. The positioning of these sensor assemblies along the magnetic axis is similar to that already described.

To illustrate the operation of the ferrous object sensor assembly in accordance with the present invention, a bar magnet having the dimensions 5,1 mm x 5,1 mm x 6,4 mm (0.20 inch x 0.20 inch x 0.25 inch) and a strength of approximately 3,550 Gauss was used with a linear Hall effect IC, for example, a Sprague Model No. UGN 3503, in an arrangement as shown in Fig. 10. The outputs of the Hall effect IC for a variety of distances of separation of a ferromagnetic object 56 from a pole face of the magnet 34 are as shown below in Table 1:

**TABLE 1**

| Without Flux Concentrator | |
|---|---|
| Air Gap | Flux measured |
| 0,254 mm (0,010 inch) | 320,2 Gauss |
| 0,381 mm (0,015 inch) | 295,1 Gauss |
| 0,762 mm (0,030 inch) | 203,1 Gauss |
| 1,270 mm (0,050 inch) | 149,6 Gauss |
| 1,981 mm (0,078 inch) | 90,3 Gauss |
| 2,286 mm (0,090 inch) | 76,0 Gauss |
| 2,794 mm (0,110 inch) | 53,5 Gauss |
| 3,302 mm (0,130 inch) | 40,9 Gauss |
| 3,810 mm (0,150 inch) | 31,7 Gauss |

To illustrate the ability of the flux concentrator 54 of Fig. 7 to extend the range of the sensor assembly, the following Table 2 shows the output signal of the above Hall effect IC for a given separation of the ferromagnetic object 56 from the end face of the magnet 34:

**TABLE 2**

| With Flux Concentrator | |
|---|---|
| Air Gap | Flux measured |
| 0,254 mm (0,010 inch) | 622,0 Gauss |
| 0,381 mm (0,015 inch) | 566,8 Gauss |
| 0,762 mm (0,030 inch) | 433,9 Gauss |
| 1,270 mm (0,050 inch) | 288,4 Gauss |
| 1,981 mm (0,078 inch) | 172,2 Gauss |
| 2,286 mm (0,090 inch) | 158,0 Gauss |
| 2,794 mm (0,110 inch) | 113,7 Gauss |
| 3,302 mm (0,130 inch) | 83,6 Gauss |
| 3,810 mm (0,150 inch) | 61,8 Gauss |

The flux concentrator was a cylindrical body of 3,810 mm (0,15 inch) diameter and 6,985 mm (0,275 inch) length.

With the increase of the flux density substantially perpendicular to the sensing plane 32, the air gap between the pole face and the ferrous object to be sensed can be increased while maintaining the values of magnetic flux density change at that sensor position. Increasing thus the effective working range of the ferrous object sensor assembly mitigates the need for relatively precise mounting between the ferrous object and the sensor assembly.

## Claims

1. A ferrous object sensor assembly (50) comprising
- a magnetic flux sensor (30; 100; 114; 116; 118) having at least one sensing plane (32) and producing an output signal dependent on the magnetic flux density existing in said sensing plane, and
- a permanent magnet (34) providing a magnetic flux in said sensing plane (32) and having a magnetic axis (55) connecting opposing pole faces (P', P''),
**characterized** in that
said magnetic flux sensor (30; 100; 114; 116; 118) is attached to a lateral surface of said permanent magnet (34) intermediate said opposing pole faces (P', P'').

2. The ferrous object sensor assembly (50) of claim 1, wherein said magnetic flux sensor (30; 100; 114; 116; 118) is rigidly attached to said permanent magnet (34) e.g. with an adhesive.

3. The ferrous object sensor assembly (50) of claim 1 or 2, further including a ferrous piece (54) as a flux concentrator rigidly attached to said magnetic flux sensor (30; 100; 114; 116; 118) e.g. with an adhesive.

4. The ferrous object sensor assembly of anyone of the claims 1 to 3 wherein said magnetic flux sensor comprises a Hall effect sensor (30).

5. The ferrous object sensor assembly (50) of claim 4 wherein said sensing plane (32) is perpendicular to radial components of the magnetic flux emanating from said lateral surface intermediate said pole faces (P', P'').

6. The ferrous object sensor assembly (50) of anyone of the claims 1 to 3, wherein said magnetic flux sensor comprises a magnetic switch as e.g. a leaf switch (118), a reed switch (100) or an axial contact switch (114).

7. The ferrous object sensor assembly (50) of anyone of the claims 1 to 3 wherein said magnetic flux sensor (116) comprises a magnetically variable resistive element (112).

8. The ferrous object sensor assembly of claim 7 wherein said sensing plane (32) is parallel to an internal magnetization plane of said magnetically variable resistive element (112).

9. The ferrous object sensor assembly (50) of anyone of the claims 6 to 8 wherein said sensing plane (32) is parallel to radial components of the magnetic flux emanating from said lateral surface intermediate said pole faces (P', P'').

10. Use of the ferrous object sensor assembly (50) of anyone of the preceding claims as a proximity sensor for sensing the presence of a tooth (45) or notch (61) of a ferrous wheel (43), wherein said wheel is disposed adjacent one of said pole faces (P', P'') of said permanent magnet (34).

11. The ferrous object sensor assembly (50) of anyone of the claims 1 to 9 as used in accordance with claim 10, wherein the other one of said pole faces (P', P'') is shielded from being magnetically influenced.

## Patentansprüche

1. Sensoranordnung (50) für eisenartige Gegenstände mit
- einem Magnetflußsensor (30; 100; 114; 116; 118), der mindestens eine Fühlebene (32) aufweist und ein von der in dieser Fühlebene herrschenden Magnetflußdichte abhängiges Ausgangssignal liefert, und
- einem Permanentmagneten (34), der in dieser Fühlebene (32) einen Magnetfluß hervorbringt und eine entgegengesetzte Polflächen (P', P'') verbindende magnetische Achse (55) besitzt,
dadurch **gekennzeichnet**, daß
der Magnetflußsensor (30; 100; 114; 116; 118) an einer seitlichen Oberfläche des Permanentmagneten (34) zwischen den entgegengesetzten Polflächen (P', P'') angebracht ist.

2. Sensoranordnung (50) für eisenartige Gegenstände nach Anspruch 1, worin der Magnetflußsensor (30; 100; 114; 116; 118), beispielsweise mittels eines Klebstoffs, starr an dem Permanentmagneten (34) angebracht ist.

3. Sensoranordnung (50) für eisenartige Gegenstände nach Anspruch 1 oder 2, des weiteren enthaltend ein eisenartiges Stück (54) als Flußkonzentrator, der an dem Magnetflußsensor (30; 100; 114; 116; 118) beispielsweise mittels eines Klebstoffs starr angebracht ist.

4. Sensoranordnung (50) für eisenartige Gegenstände nach irgendeinem der Ansprüche 1 bis 3, worin der Magnetflußsensor einen Hall-Effekt-Sensor (30) aufweist.

5. Sensoranordnung (50) für eisenartige Gegenstände nach Anspruch 4, worin die Fühlebene (32) senkrecht zu radialen Komponenten des von der betreffenden seitlichen Oberfläche zwischen den Polflächen (P', P'') ausgehenden magnetischen Flusses verläuft.

6. Sensoranordnung (50) für eisenartige Gegenstände nach irgendeinem der Ansprüche 1 bis 3, worin der Magnetflußsensor einen magnetischen Schalter, wie z.B. einen Blattschalter (118), einen Reed-Schalter (100) oder einen Axialkontaktschalter (114), aufweist.

7. Sensoranordnung (50) für eisenartige Gegenstände nach irgendeinem der Ansprüche 1 bis 3, worin der Magnetflußsensor (116) ein magnetisch variables Widerstandselement (112) aufweist.

8. Sensoranordnung (50) für eisenartige Gegenstände nach Anspruch 7, worin die Fühlebene (32) parallel zu einer internen Magnetisierungsebene des magnetisch variablen Widerstandselements (112) verläuft.

9. Sensoranordnung (50) für eisenartige Gegenstände nach irgendeinem der Ansprüche 6 bis 8, worin die Fühlebene (32) parallel zu radialen Komponenten des von der betreffenden seitlichen Oberfläche zwischen den Polflächen (P', P'') ausgehenden magnetischen Flusses verläuft.

10. Verwendung der Sensoranordnung (50) für eisenartige Gegenstände nach irgendeinem der vorhergehenden Ansprüche als Näherungsfühler zur Feststellung der Anwesenheit eines Zahnes (45) oder einer Aussparung (61) eines Rades (43) aus eisenartigem Material, wobei das Rad bei einer der Polflächen (P', P'') des Permanentmagneten (34) angeordnet ist.

11. Sensoranordnung (50) für eisenartige Gegenstände nach irgendeinem der Ansprüche 1 bis 9, verwendet gemäß Anspruch 10, worin die andere der Polflächen (P', P'') gegenüber einer magnetischen Beeinflussung abgeschirmt ist.

## Revendications

1. Un ensemble de détection d'objets ferreux (50) comprenant
- un capteur de flux magnétique (30 ; 100 ; 114 ; 116 ; 118 ;) ayant au moins un plan sensible (32) et produisant un signal de sortie dépendant de la densité du flux magnétique présent dans ledit plan sensible, et
- un aimant permanent (34) fournissant un flux magnétique dans ledit plan sensible (32) et ayant un axe magnétique (55) reliant des surfaces de pôles opposés (P', P''),
caractérisé en ce que
ledit capteur de flux magnétique (30 ; 100 ; 114 ; 116; 118) est fixé sur une surface latérale dudit aimant permanent (34) entre lesdites surfaces de pôles opposés (P', P'').

2. L'ensemble de détection d'objets ferreux (50) selon la revendication 1, dans lequel le capteur de flux magnétique (30 ; 100 ; 114 ; 116 ; 118) est fixé rigidement sur l'aimant permanent (34), par exemple à l'aide d'un adhésif.

3. L'ensemble de détection d'objets ferreux (50) selon la revendication 1 ou 2, comprenant en outre un organe ferreux (54) comme concentrateur de flux fixée rigidement au capteur de flux magnétique (30 ; 100 ; 114 ; 116 ; 118), par exemple à l'aide d'un adhésif.

4. L'ensemble de détection d'objets ferreux selon l'une quelconque des revendications 1 à 3, dans lequel le capteur de flux magnétique comprend un capteur à effet Hall (30).

5. L'ensemble de détection d'objets ferreux (50) selon la revendication 4, dans lequel le plan sensible (32) est perpendiculaire à des composantes radiales du flux magnétique émanant de la surface latérale entre les surfaces de pôles (P', P'').

6. L'ensemble de détection d'objets ferreux (50) selon l'une quelconque des revendications 1 à 3, dans lequel le capteur de flux magnétique comprend un commutateur magnétique tel qu'un commutateur à lame (118), un commutateur à anche (100) ou un commutateur à contact axial (114).

7. L'ensemble de détection d'objets ferreux (50) selon l'une quelconque des revendications 1 à 3, dans lequel le capteur de flux magnétique (116) comprend un élément résistif à variation magnétique (112).

8. L'ensemble de détection d'objets ferreux selon la revendication 7, dans lequel ledit plan sensible (32) est parallèle à un plan de magnétisation interne dudit élément résistif à variation magnétique (112).

9. L'ensemble de détection d'objets ferreux (50) de l'une quelconque des revendications 6 à 8, dans lequel le plan sensible (32) est parallèle aux composantes radiales du flux magnétique émanant de la surface latérale située entre les surfaces de pôles (P', P'').

10. Utilisation de l'ensemble de détection d'objets ferreux (50) de l'une quelconque des revendications précédentes, comme détecteur de proximité pour détecter la présence d'une dent (45) ou d'un cran (61) d'une roue ferreuse (43), dans laquelle ladite roue est disposée adjacente à l'une desdites surfaces de pôles (P', P'') de l'aimant permanent (34).

11. L'ensemble de détection d'objets ferreux (50) selon l'une quelconque des revendications 1 à 9 utilisé conformément à la revendication 10, dans lequel l'autre desdites surfaces de pôles (P', P'') est protégée des influences magnétiques.
